# EUROPEAN PATENT APPLICATION

(11) **EP 1 816 631 A2**
(43) Date of publication of application: **08.08.2007**
(21) Application number: 07075021.1
(22) Date of filing: 10.01.2007
(51) Int. Cl.: G09G 3/20

(54) **Display apparatus and control method thereof**

(30) Priority: 03.02.2006 KR 20060010823
(71) Applicant: Samsung Electronics Co., Ltd., Suwon-si, Gyeonggi-Do (KR)
(72) Inventor: Kim, Hye-rim, Byeokjeokgol 9-danji, Suwon-si Gyeonggi-do (KR)
(74) Representative: Grootscholten, Johannes A.M.

(57) **Abstract**

A display apparatus includes a signal receiving part to receive an image signal, a signal processing part to process the image signal, an OSD (on screen display) generating part to generate an OSD signal, a control part to detect the image signal inputted through the signal receiving part to determine a source of the image signal, to set setup data to conduct signal processing of the signal processing part based on a result of the source determination, and to generate (or to produce or to trigger) an OSD display event for the OSD generating part, and a display module including a display panel, a pattern storing part to store a predetermined test pattern, and a panel driving part to drive the display panel to display the test pattern if a signal from the signal processing part is abnormal.

## Description

### CROSS-REFERENCE TO RELATED APPLICATIONS

This application claims priority under 35 USC § 119(a) of Korean Patent Application No.2006-0010823, filed on February 3, 2006, in the Korean Intellectual Property Office, the disclosure of which is incorporated herein in its entirety by reference.

### BACKGROUND OF THE INVENTION

### Field of the Invention

The present general inventive concept relates to a display apparatus and a control method thereof, and more particularly, to a display apparatus provided with a display module having a BIST (built-in self test) mode, and a control method thereof.

### Description of the Related Art

Generally, a BIST mode refers to a mode of self-testing (e.g., on its own) whether a module is operating normally.

A display module employing the BIST mode displays a predetermined test pattern by operating in concert with the BIST mode if a normal signal is not inputted or if a an abnormal signal is inputted.

The displayed test pattern indicates whether the display module has detected an error (or detected no error) even if the display module does not have a normal inputted image signal to display.

In general, the BIST mode of the display module sequentially forms patterns. For example, the BIST mode may repeatedly form patterns in white, black, red, green, blue, white, etc., in such or other cyclic order.

A display apparatus equipped with a plug & play OSD (on screen display) and/or a non-signal component OSD has been recently designed. When the display apparatus is equipped with a display module containing the BIST mode, an OSD display event of the BIST mode occurs before an inputted signal is detected and setup data required for (or related to) signal processing is set. Thus, the display module may recognize an OSD signal of the plug and play OSD as an abnormal signal when operating in concert with the BIST mode.

That is, the display module may display a test pattern, and accordingly, a normal OSD signal may not be displayed.

### SUMMARY OF THE INVENTION

The present general inventive concept provides a display apparatus, which is capable of setting setup data required for (or related to) signal processing before the occurrence of an OSD display event so that a display module can normally display an OSD signal, and a control method thereof.

Additional aspects and advantages of the present general inventive concept will be set forth in part in the description which follows and, in part, will be obvious from the description, or may be learned by practice of the general inventive concept.

The foregoing and/or other aspects of the present general inventive concept may be achieved by providing a display apparatus including a signal receiving part to receive an image signal; a signal processing part to process the image signal, an OSD (on screen display) generating part to generate an OSD signal, a control part to detect the image signal inputted into the signal receiving part to determine a source (source determination) of the image signal, to set setup data required to process a signal of the signal processing part based on a result of the source determination, and then to generate an OSD display event to trigger the OSD generating part, and a display module including a display panel, a pattern storing part to store a predetermined test pattern (e.g., one, two or more test patterns), and a panel driving part to drive the display panel to display the test pattern if a signal from the signal processing part is abnormal.

The control part may supply the setup data to the display module.

The panel driving part may drive the display panel to normally display the OSD signal if the OSD signal is inputted after the setup data is set, and may drive the display panel to display the test pattern if the OSD signal is inputted before the setup data is set.

The signal processing part may include a scaler, and the scaler, the OSD generating part, and the control part may be provided as a single integrated processor chip or as part of a single integrated chip.

The test pattern may include a pattern related to a BIST (built-in self test) mode.

The OSD display event may include at least one of a plug & play OSD and a non-signal component OSD.

The foregoing and/or other aspects and utilities of the present general inventive concept may also be achieved by providing a method of controlling a display apparatus including a signal receiving part to receive an image signal, a signal processing part to process the image signal, an OSD generating part to generate an OSD signal; and a display module including a display panel to display an image signal (e.g., or an OSD signal), a pattern storing part to store a predetermined test pattern, and a panel driving part to drive the display panel to display the test pattern if a signal from the signal processing part is abnormal, the method including detecting the image signal inputted (e.g., or received) into the signal receiving part to determine a source (source determination) of the image signal, setting setup data required for signal processing of the signal processing part based on a result of the source determination, and generating an OSD display event for the OSD generating part.

The setting of the setup data further may include supplying the setup data to the display module.

The method may further include generating the OSD signal by the OSD generating part, and driving the display panel to normally display the OSD signal by the panel driving part.

The test pattern may include a pattern related to a BIST mode.

The OSD display event may include at least one of a plug & play OSD (and/or signal) and a non-signal component OSD (and/or signal).

The foregoing and/or other aspects of the present general inventive concept may also be achieved by providing a display apparatus including a display module, a signal processing part to process an input signal to generate an image signal, and a control unit to control the display module to display a test pattern according to a state of the processed image signal. Also, the display module may include a panel to display the image, and a panel driving part to generate a test pattern of a BIST mode to display the test pattern on the panel.

The control unit may prevent the display module from displaying the test pattern if the state of the image signal is a normal signal.

The control unit may control the display module to display an OSD signal corresponding to processing of an input signal when the display module is in a BIST mode.

The foregoing and/or other aspects of the present general inventive concept may also be achieved by providing a display apparatus including a display module to generate or display a test pattern of a BIST mode according to a determination of a state of an input signal.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a control block diagram of a display apparatus according to an embodiment of the present general inventive concept; and
FIG. 2 is a control flowchart illustrating an operation of the display apparatus in FIG. 1, according to an embodiment of the general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

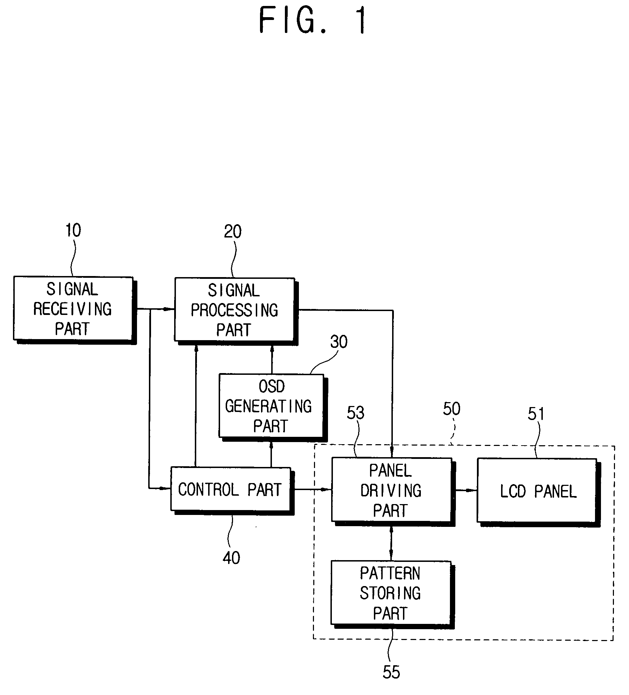

As illustrated in the embodiment of FIG. 1 of the present inventive concept, a display apparatus includes a signal receiving part 10, a signal processing part 20, an OSD (on screen display) generating part 30, a control part 40, and a display module 50.

The signal receiving part 10 receives an external image signal. The signal receiving part 10 may include at least two of a broadcasting tuner to receive one or more broadcasting signals, a D-sub connector to receive a PC-analog signal, a DVI connector, an HDMI connector, a component terminal, and an S-video terminal to receive signals from a plurality of external input sources.

The signal processing part 20 processes a received image signal and supplies the processed signal to the display module 50.

The signal processing part 20 may have various functions corresponding to a format of an inputted image signal. For example, the signal processing part 20 may have an A/D (analog to digital) converting function to convert an inputted image signal having various formats to a digital signal having a predetermined format, a digital decoding function, a scaling function to receive a digital image signal and/or an analog image signal and adjust a vertical frequency, a resolution, an aspect ratio, etc. to comply with an output standard of the display module 50, and a predetermined format converting function. Here, the signal processing part 20 may include a scaler (not illustrated).

In addition, the signal processing part 20 may include a plurality of registers in which setup data required (or may be required) for a signal process is set. The control part 40 sets respective register values of the setup data, which will be described later, and then the signal processing part 20 processes an image signal according to the set register values. Here, some register values used for a signal process to initialize the signal processing part 20 may be set to default values.

The OSD generating part 30 is used to generate a plug & play OSD signal and/or a non-signal component OSD signal (e.g., a non-OSD component signal) under control of the control part 40 (further described herein). The OSD generating part 30 may be implemented by an OSD generating IC (integrated circuit). The generated OSD signal is supplied to the display module 50 via a scaling process of the signal processing part 20 and is displayed on the display module 50. If there also exists an external image signal to be processed via the signal processing part 20, a combination of the OSD signal together with the external image signal is supplied to the display module 50.

The control part 40 is used to detect an image signal inputted into or received via the signal receiving part 10, to determine a source (source determination) of the detected signal, and to set the setup data required (or may be required) to conduct a signal process of the signal processing part 20 based on a result of the source determination. The control part 40 may be implemented by a software algorithm and/or an MCU (micro controller unit) executing the software algorithm. Alternatively, the signal processing part 20, the OSD generating part 30 and the control part 40 may be implemented via a single integrated processor chip (or as part of an integrated processor chip).

Specifically, the control part 40 may detect a sync signal of the inputted image signal, and determines a source, format and the like (e.g., part of a source determination) of the inputted image signal. Then, for example, the control part 40 sets the setup data related to the signal process of the signal processing part 20 according to whether the signal source is determined to be, for example, a PC (personal computer) or a component other than the PC.

After setting the setup data, the control part 40 produces (or generates) an OSD display event so that the OSD generating part 30 generates an OSD signal, and supplies the OSD signal to the display module 50. The OSD display event may include a plug and play OSD which may generate an OSD signal or a non-signal component OSD which may generate a signal.

In the present embodiment, as shown in FIG. 1, the display module 50 includes an LCD (liquid crystal display) panel 51 to display a video signal, a panel driving part 53 to drive the LCD panel 51, and a pattern storing part 55 to store information relating to a predetermined test pattern. According to an embodiment of the present general inventive concept, the test pattern may be a pattern for a BIST (built-in self test) mode.

In accordance with an embodiment of the present general inventive concept, the panel driving part 53 inputs the image signal and the OSD signal (supplied by the signal processing part 20), to the LCD panel 51 so that the LCD panel 51 displays an image. If an abnormal signal is inputted from the signal processing part 20, the panel driving part 53 drives the LCD panel 51 to display a selected test pattern based on the information stored in the pattern storing part 55.

The panel driving part 53 may include a plurality of registers in which setup data required for a signal process are set. The registers may be set with information from the control part 40 or the signal processing part 20.

That is, the control part 40 detects the inputted signal and determines the source of the signal, and supplies information (required to conduct a signal process of the display module 50 as well as to conduct a signal process of the signal processing part 20) to the display module 50. In this case, when the control part 40 sets register values of the signal processing part 20, the register values may be automatically supplied to the panel driving part 53. Then, the panel driving part 53 processes an image signal inputted from the signal processing part 20 (based on the set register values) so that the LCD panel 51 displays an image.

According to the present embodiment, pattern data related to the BIST mode may be stored in the pattern storing part 55 of the display module 50 in the course of manufacturing the display module 50. The pattern storing part 55 may be implemented by an EPROM (erasable programmable read-only memory), an EEPROM (electrically erasable programmable read-only memory) or the like. Here, the pattern data may be a control code to control the LCD panel 51 to perform a predetermined operation. Alternatively, the pattern data may be stored in a separate memory provided within the panel driving part 53 or the pattern data may be implemented by patterns correlated with (or stored) in the LCD panel 51.

If there is no input image signal or an inputted image signal is abnormal, the panel driving part 53 controls the LCD panel 51 to display test patterns (e.g., sequentially) based on the pattern data related to the BIST mode stored in the pattern storing part 55. For example, the panel driving part 53 may control the LCD panel 51 to operate with the BIST mode so that the LCD panel 51 repeatedly (or cyclically) displays a white pattern, a black pattern, a red pattern, a green pattern, a blue pattern, a white pattern, etc., in order. Accordingly, it can be determined that the display module 50 is operating correctly (e.g., no error) even though the display module 50 can not normally display an inputted image signal.

If the panel driving part 53 receives a signal from the signal processing part 20 in a state where the setup data required for the image process of the panel driving part 53 is not set in advance, the panel driving part 53 may determine the received signal to be an abnormal signal, and accordingly, drive and/or test the LCD panel 51 to operate with the BIST mode.

However, if the display module 50 is already supplied with the setup data (from the control part 40 or from the signal processing part 20) before receiving an inputted OSD signal, then the LCD panel 51 displays the inputted OSD signal normally according to the setup data.

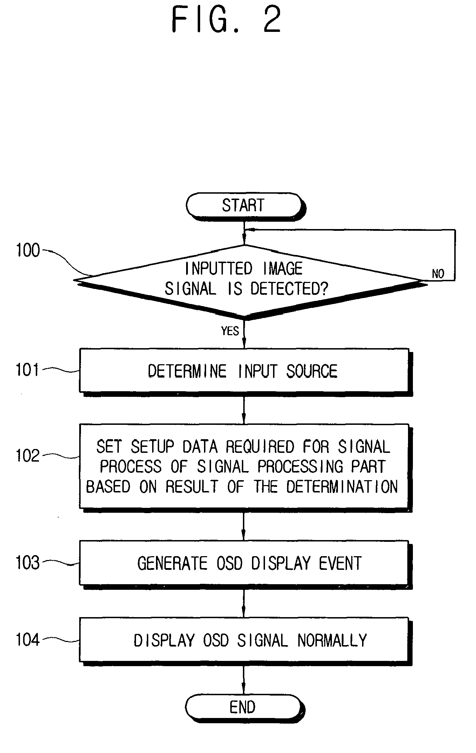

Pursuant to an embodiment of the present general inventive concept, the control flowchart of the display apparatus in FIG. 1 is now described by referring to FIG. 2.

Referring to FIGS. 1 and 2, when the display apparatus is initially powered on, power is supplied to the respective modules to be initialized. At operation 100, the control part 40 detects whether an image signal is inputted at signal receiving part 10.

If an inputted signal (e.g., image signal) is detected, the control part 40 determines the input source and/or the format of the inputted signal at operation 101.

Then, the control part 40 sets setup data required to conduct signal processing of the signal processing part 20 at operation 102, based on a result of the source determination at the operation 101. Here, the control part 40 may set the setup data required to conduct signal processing of the display module 50, or the corresponding information may be automatically outputted from the signal processing part 20 to the display module 50.

Thereafter, the control part 40 conducts an OSD display event so that the OSD generating part 30 generates a plug & play OSD signal or a non-signal component OSD signal to be supplied to the display module 50 at operation 103. Because the setup data required to conduct signal processing of the display module 50 already has been set, the display module 50 can identify the normal OSD signal generated from the OSD generating part 30, and accordingly, the display module 50 can display the normal OSD signal at operation 104.

In the above-described embodiment of the present general inventive concept, the panel driving part 53 determines whether a normal signal has been inputted and determines whether the display module 50 is operated with the BIST mode. Alternatively, the control part 40 may apply a control signal to the display module to determine whether the display module 50 operates with the BIST mode. Specifically, the control part 40 may provide a determination signal to the panel driving part 53 of the display module 50 to determine whether an inputted signal is a normal image signal, and controls the control module 50 to operate in normal display mode in which the LCD panel 51 displays the inputted signal or the LCD panel 51 displays the test pattern when operating in or employing the BIST mode.

Here, it may be determined that a state of the image signal is a normal state when the image signal is suitable to process in the signal processing part or is suitable to display in the display module.

Conversely, it may be determined that the state of the image signal is abnormal when the image signal (or other signal or no signal) is not suitable to process in the signal processing part is or not suitable to display in the display module (or display panel).

Also, in the above-described embodiment of the present general inventive concept, the display module 50 is provided with the LCD panel 51. However, the display module 50 may be provided with other display panels employing the BIST mode.

As is apparent from the above description, the present general inventive concept provides a display apparatus, which sets setup data required for (or related to) signal processing before the occurrence of an OSD display event so that a display module can normally display an OSD signal, and a control method thereof.

The present general inventive concept can also be embodied as computer-readable codes on a computer-readable recording medium. The computer-readable recording medium is any data storage device that can store data which can be thereafter read by a computer system. Examples of the computer-readable recording media include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A display apparatus comprising:
a signal receiving part to receive an image signal;
a signal processing part to process the image signal;
an OSD (on screen display) generating part to generate an OSD signal;
a control part to detect the image signal received by the signal receiving part to conduct a source determination of the image signal, to set setup data to conduct a signal processing of the signal processing part based on a result of the source determination, and to generate an OSD display event to trigger the OSD generating part; and
a display module comprising a display panel, a pattern storing part to store a test pattern, and a panel driving part to drive the display panel to display the test pattern according to a determination if a signal from the signal processing part is abnormal.

2. The display apparatus according to claim 1, wherein the control part supplies the setup data to the display module.

3. The display apparatus according to claim 2, wherein:
the signal processing part comprises a scaler; and
the scaler, the OSD generating part, and the control part are provided as part of a single integrated processor chip.

4. The display apparatus according to claim 3, wherein the test pattern comprises a pattern related to a BIST (built-in self test) mode.

5. The display apparatus according to claim 4, wherein the OSD display event comprises at least one of a plug and play OSD signal and a non-signal component OSD signal.

6. The display apparatus according to claim 2, wherein the panel driving part drives the display panel to display the OSD signal after the setup data is set, or drives the display panel to display the test pattern if the OSD signal is inputted before the setup data is set.

7. The display apparatus according to claim 3, wherein:
the signal processing part comprises a scaler; and
the scaler, the OSD generating part, and the control part are provided as part of a single integrated processor chip.

8. The display apparatus according to claim 7, wherein the test pattern comprises a pattern related to a BIST (built-in self test) mode.

9. The display apparatus according to claim 8, wherein the OSD display event comprises at least one of a plug and play OSD signal and a non-signal component OSD signal.

10. The display apparatus according to claim 1, wherein:
the signal processing part comprises a scaler; and
the scaler, the OSD generating part, and the control part are provided as part of a single integrated processor chip.

11. The display apparatus according to claim 10, wherein the test pattern comprises a pattern related to a BIST (built-in self test) mode.

12. The display apparatus according to claim 11, wherein the OSD display event comprises at least one of a plug & play OSD signal and a non-signal component OSD signal.

13. A method to control a display apparatus, the method comprising:
detecting an image signal received by a signal receiving part to conduct a source determination of the image signal;
setting setup data to conduct signal processing of a signal processing part based on a result of the source determination; and
generating an OSD display event to trigger an OSD generating part according to the signal processing.

14. The method according to claim 13, wherein the test pattern comprises a pattern related to a BIST mode.

15. The method according to claim 14, wherein the OSD display event comprises at least one of a plug & play OSD signal and a non-signal component OSD signal.

16. The method according to claim 13, wherein the setting of the setup data further comprises supplying the setup data to the display module.

17. The method according to claim 16, wherein the test pattern comprises a pattern related to a BIST mode.

18. The method according to claim 17, wherein the OSD display event comprises at least one of a plug & play OSD signal and a non-signal component OSD signal.

19. The method according to claim 16, further comprising:
generating the OSD signal by an OSD generating part; and
driving a display panel to display the OSD signal.

20. The method according to claim 19, wherein the test pattern comprises a pattern related to a BIST mode.

21. The method according to claim 20, wherein the OSD display event comprises at least one of a plug and play OSD signal and a non-signal component OSD signal.

22. A display apparatus comprising:
a display module having a panel to display an image and a panel driving part to generate a test pattern of a BIST mode to the panel to display the test pattern;
a signal processing part to process an input signal to generate an image signal; and
a control unit to control the display module to display the test pattern according to a state of the processed image signal.

23. The display apparatus of claim 22, wherein the control unit prevents the display module from displaying the test pattern when the state of the image signal is a normal signal.

24. The display apparatus of claim 22, wherein the control unit controls the display module to display an OSD corresponding to the processed input signal when the display module is in the BIST mode.

25. A display apparatus comprising:
a display module to generate or to display a test pattern of a BIST mode according to a determination of a state of an input signal to be displayed.
